# EUROPÄISCHE PATENTSCHRIFT

(11) **EP 0 679 569 B1**
(45) Veröffentlichungstag und Bekanntmachung des Hinweises auf die Patenterteilung: **17.03.1999**
(21) Anmeldenummer: 95100407.6
(22) Anmeldetag: 13.01.1995
(51) Int. Cl.: B62M 11/16

(54) **Schalteinrichtung für ein Wechselgetriebe in Mehrgangnaben für Fahrräder**
Operating device for bicycle change-speed hubs
Organe de commande pour engrenage à changement de vitesse dans des moyeux à plusieurs vitesses pour bicyclettes

(30) Priorität: 30.04.1994 DE 4415266
(43) Veröffentlichungstag der Anmeldung: 02.11.1995
(73) Patentinhaber: SRAM Deutschland GmbH, 97424 Schweinfurt (DE)
(72) Erfinder: Meier-Burkamp, Gerhard, Dipl.-Ing. (FH), D-97493 Bergrheinfeld (DE)

(56) Entgegenhaltungen:
- AT-B- 391 668
- DE-A- 2 458 871
- DE-A- 4 142 867

## Beschreibung

Die Erfindung betrifft eine Schalteinrichtung für ein Wechselgetriebe in Mehrgangnaben für Fahrräder gemäß dem Oberbegriff des Anspruchs 1.

Eine konzentrisch um die Nabenachse einer Getriebenabe mit einer Vielzahl von Gangstufen angeordnete Schalteinrichtung ist aus der DE 41 42 867 bekannt, wo die Planetengetriebe Planetenräder aufweisen, die mit Sonnenrädern im Eingriff stehen, welche über von außen betätigbare, in einer Richtung wirksame Kupplungen zwischen einem Zustand, indem sie gegenüber der feststehenden Welle frei drehbar sind, und einem auf der feststehenden Welle festgesperrten Zustand umschaltbar sind. Die Betätigung der auf die Sonnenräder nur in einer Richtung wirkenden Kupplungen erfolgt durch positionsbezogene Beziehungen von Vorsprüngen, die auf der feststehenden Welle angeformt sind, relativ zu Betätigungselementen, die auf einem auf Umfangsflächen der feststehenden Welle verschieblichen Schaltelemente angeordnet sind. Durch derartige Betätigungen der Sonnenräder wird ein Abtriebsweg festgelegt, der durch eine der beiden einseitig wirkenden Kupplungen verläuft. Eine solche Betätigung erfordert eine präzise Abstimmung des rohrförmigen Schaltelements sowie dessen Zweiteilung mit den Schwierigkeiten bei der Montage. Ferner ist die für jede Schaltebene anders geartete Beschaffenheit der Schalt- und Kupplungselemente teuer und wenig übersichtlich.

Eine Schalteinrichtung ähnlicher Bauart ist aus der DE 24 58 871 bekannt, wo durch Steuerbewegungen eines ebenfalls rohrförmigen Schaltelementes in einer Richtung wirksame Kupplungen gegenüber der feststehenden Welle ein- und ausschaltbar sind. Auch hier ist eine komplizierte Montage des mehrteiligen Schaltelementes sowie eine teure Herstellung der aus vielen unterschiedlichen Teilen bestehenden Getriebenabe das Haupthindernis für die rationelle Fertigung derselben.

Hieraus und aus den Vorgaben des Marktes leitet sich als Aufgabe der Erfindung die Darstellung einer kostengünstig zu fertigenden Getriebenabe mit einer erhöhten Vielzahl von Gängen ab mit einer Schalteinrichtung, die ausschließlich in einer Drehrichtung wirkende Kupplungen aus- und einschaltet, die in vielen Ebenen auf der Nabenachse aufgereiht sind.

Die Lösung ist im kennzeichnenden Teil des Anspruchs 1 beschrieben. Ausgestaltungen sind den Unteransprüchen zu entnehmen.

Die Erfindung wird nachstehend anhand eines mit Zeichnungen veranschaulichten Ausführungsbeispieles einer Schalteinrichtung für ein Wechselgetriebe in Mehrgangnaben erläutert. Es zeigen:
- Fig. 1: eine Schalteinrichtung mit einem Festkonus, einer Seilrolle, vier Nockenringen sowie mehreren Schaltelementen auf einer Nabenachse im Schnitt auf einer Ebene koaxial zu dieser Nabenachse;
- Fig. 2: die Schalteinrichtung im Schnitt auf einer Ebene quer zur Nabenachse mit den Schaltelementen, umfassend einen Nockenhebel, eine Schaltnockenstange, einen Nockenring sowie eine Schaltbuchse;
- Fig. 3: einen Teilschnitt quer zur Nabenachse mit einem Sonnenrad und der Schaltnockenstange, die mit einem ersten Profil eine Klinke aushebt.
- Fig. 4: den Teilschnitt gemäß Fig. 3, mit der Schaltnockenstange, dem Sonnenrad und der vom ersten Profil ausgehobenen Klinke;
- Fig. 5: den Teilschnitt nach Fig. 4 mit ebenfalls ausgehobener Klinke auf dem gedrehten ersten Profil der Schaltnockenstange;
- Fig. 6: den Teilschnitt nach Fig. 4 mit der von einem zweiten Profil der Schaltnockenstange ausgehobene Klinke;
- Fig. 7: den Teilschnitt nach Fig. 4 mit der Klinke im Eingriff mit einem Steg der Nabenachse bei verschwenktem zweiten Profil der Schaltnockenstange;

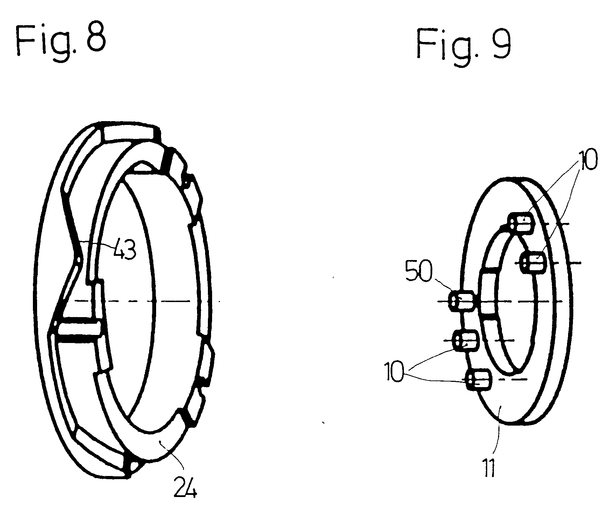

- Fig. 8: ein Nockenring mit einer axialen Kurve zur Steuerung einer Gleiteinrichtung einer Schaltbuchse perspektivisch dargestellt;
- Fig. 9: eine Lagerscheibe mit Mitnehmern zur Steuerung der Schaltnockenstangen in perspektivischer Darstellung.

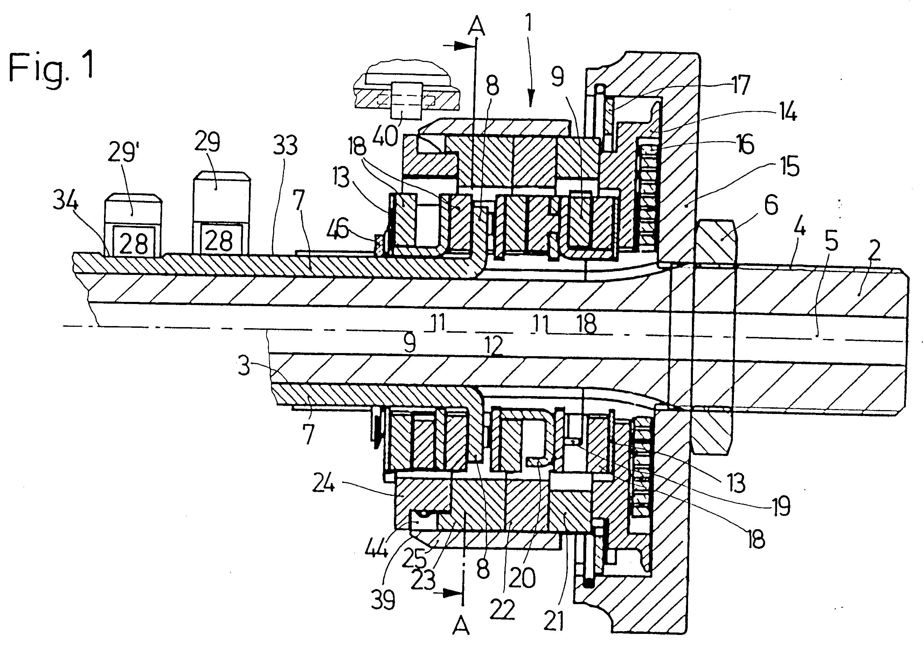

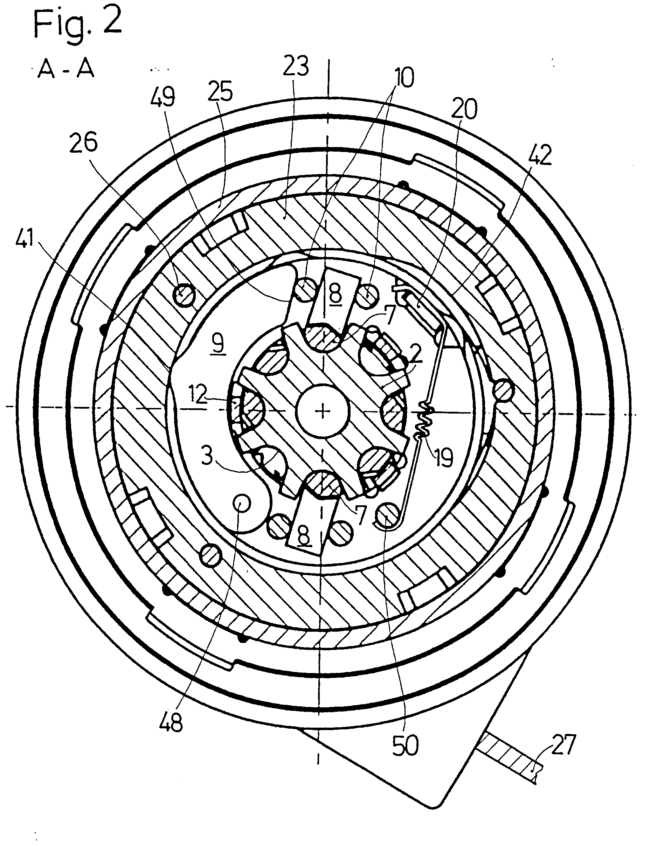

Gemäß Fig. 1 wird eine Schalteinrichtung 1 für ein Wechselgetriebe in Mehrgangnaben für Fahrräder beschrieben, das endseitig auf einer Nabenachse 2 konzentrisch um diese herum angeordnet ist. Die Schalteinrichtung 1 stellt eine Montageeinheit auf der Nabenachse 2 dar und wird axial auf diese aufgeschoben und durch eine Mutter 6 und einen Sprengring 46 gesichert. Im Einzelnen umfaßt die Schalteinrichtung 1 einen Festkonus 15, eine Seilrolle 14, ein Führungsblech 17, einen ersten Nockenring 21, einen zweiten Nockenring 22, einen dritten Nockenring 23, einen vierten Nockenring 24, vier Steuerscheiben 18, vier Nockenhebel 9, vier Lagerscheiben 11, sowie mindestens eine Anlaufscheibe 13. Die Fig. 2 stellt einen Schritt quer zur Nabenachse 2 durch den dritten Nockenring 23 dar, wobei acht Schaltnockenstangen 7 sichtbar werden, die in Längsnuten 3 der Nabenachse 2 halbkreisförmig gelagert sind und sich achsparall am Außenumfang der Nabenachse 2 aus der Schalteinrichtung 1 in Richtung Wechselgetriebe der Mehrgangnabe erstrecken. Am jeweiligen Ende der Schaltnockenstangen 7, welches in die Schalteinrichtung hineinreicht, ist ein Haken 8 angeformt, der rechtwinklig abgebogen ist und von jeweils zwei Mitnehmern 10 geführt wird.

Die Schaltnockenstangen 7 übermitteln die Steuerbewegungen von der Schalteinrichtung 1 in das hier nicht dargestellte Wechselgetriebe der Nabe, welche in mehreren Ebenen quer zur Nabenachse 2 mindestens zwei Sonnenräder 29,29' aufweist, in welchen schwenkbare Klinken 28 angeordnet sind, die zum Zwecke der Bildung einer in eine Drehrichtung wirkenden Kupplung gegen jeweils einen Steg 30 nach radial innen mittels einer Feder 45 angefedert sind, wobei die Stege 30 achsparall am Außenumfang der Nabenachse 2 verlaufen und wobei die Flanken der Stege 30 von den Längsnuten 3 gebildet werden. Alle Stege 30 sind gleich hoch und bilden mit ihrer Umfangsfläche 47 den Außendurchmesser der Nabenachse 2. Zwischen der Kontur der Längsnuten 3 und der Umfangsfläche 47 ist jeweils eine Schräge 39 angeformt, die insbesondere an der Seite des Eingriffs der Klinke 28 angebracht ist.

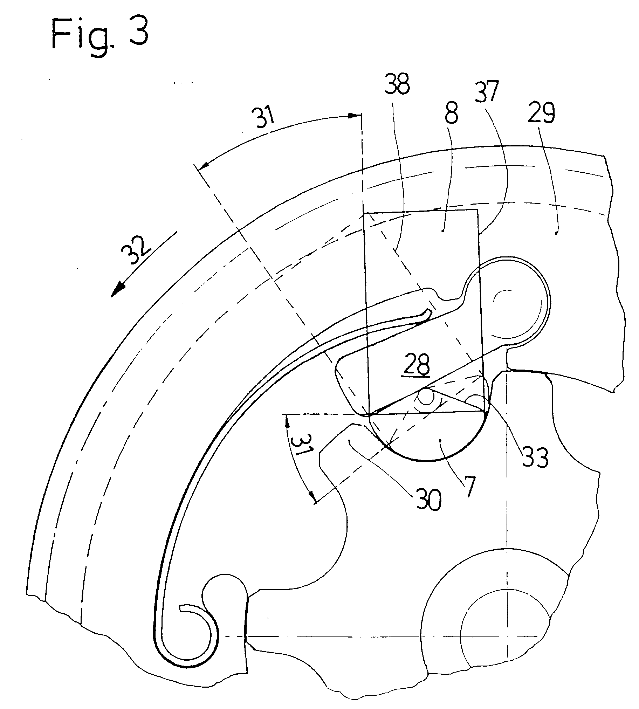

Die Schaltnockenstange 7 weist auf ihrer gesamten Länge nach radial außen ein erstes Profil 33 auf, das dachförmig ausgebildet ist, wobei der First des Daches den Radiusmittelpunkt für die Kontur der Längsnut 3 einbezieht. Die Fig. 3 zeigt die Konstellation der Klinke 28 zum Steg 30, wo deutlich gemacht wird, daß die Klinke 28 bei Drehung in der Drehrichtung 32 an dem Steg nicht zur Anlage kommen kann, sondern vielmehr von diesem abgewiesen wird.

Wie ebenfalls in Fig. 3 verdeutlich, ist die Schaltnockenstange 7 zum Schalten der Kupplungen in den Sonnenrädern 29, 29' im Wechselgetriebe der Nabe um einen Winkel 31 verschwenkbar, wobei eine erste Schaltposition 37 des Hakens 8 als die eine Extremstellung und eine zweite Schaltposition 38 des Hakens 8 als die andere Extremstellung definiert ist. Dies wird durch die Mitnehmer 10 gem. Fig. 9 erreicht, die an der Steuerscheibe 18 in axialer Richtung weisend angeordnet sind und den Haken 8 in die Mitte nehmen. Bei Drehung dieser Steuerscheibe 18 wird der Haken 8 um den besagten Winkel 31 verdreht.

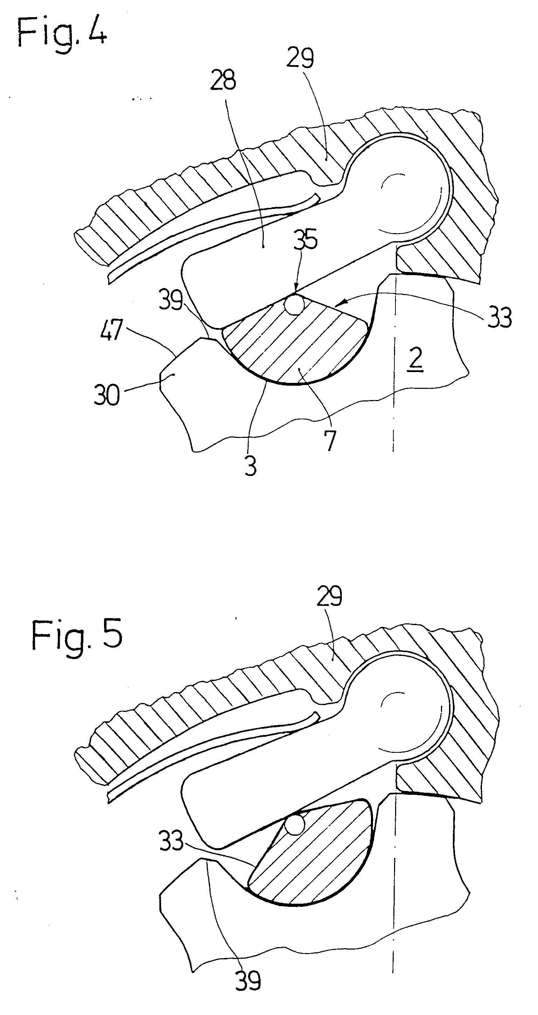

Die Verdrehung des ersten Profils 33 der Schaltnockenstange 7 wird mit den Fig. 4 und 5 verdeutlicht, wo die Klinke 28 in der ersten Schaltposition 37 gem. Fig. 4 bei Drehung in Drehrichtung 32 am ersten Profil 33 zum First des ersten Profils 33 aufläuft und nach Passieren des Firstes entlang der zweiten Dachhälfte des ersten Profils 33 über den Steg 30 gelenkt wird. Gem. Fig. 5 wird die Klinke 28 ebenfalls bis zum First des ersten Profils 33 gelenkt, allerdings ohne nach radial innen einzuschwenken, da sich die Berührungsfläche der ersten Dachhälfte des ersten Profils 33 in etwa der Umfangsfläche 47 der Nabenachse 2 anpaßt. Bei Weiterdrehen in Drehrichtung 32 kann sich die Klinke 28 dann aber am Steg 30 deshalb nicht abstützen, weil der First an der Längsseite der Klinke 28 entlanggleitet und die Kante der Klinke 28 allenfalls mit Schräge 39 zusammenführt, wodurch die Klinke 28 aber abgewiesen wird.

Da die Stege 30 nicht mit beliebig großen Schrägen 39 ausgestattet sein können, wird vorgeschlagen, auch das Profil der Klinken 26 derart auszubilden, daß die auf den Steg 30 auflaufende Kante der Klinke 28 eine Rundung oder eine Schräge aufweist, die in die nach radial innen weisende Längsseite der Klinke 28 überleitet und die Klinke 28 am Steg 30 und/oder an dessen Schräge 39 abweist.

Es ist ersichtlich, daß beide Extremstellungen des ersten Profils 33 die Klinke 28 abweisen, wodurch ein quer zur Gleitbahn der Klinke 28 auf der Nabenachse 2 angeordnetes Schaltelement gefunden ist, welches ohne größere konstruktive Vorkehrungen durch beliebig viele Sonnenradebenen hindurchführbar ist bis zu der Ebene eine Sonnenrades, beispielsweise 29', welches mit einem zweiten Profil 34 einmal mit der Nabenachse 2 verkuppelt und einmal gelöst werden soll.

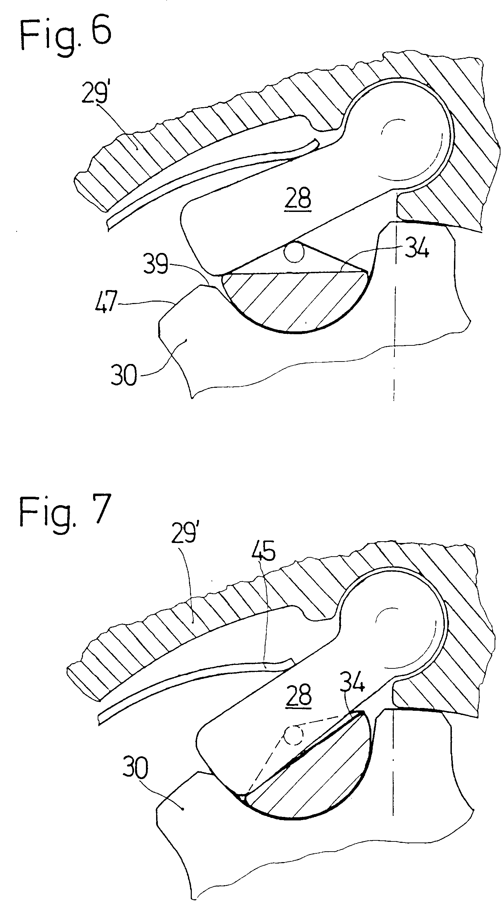

Das unter dem Sonnenrad 29' auf der Schaltnockenstange 7 angeordnete zweite Profil 34 erlaubt nämlich in der ersten Schaltposition 37 gem. Fig. 6, daß die Klinke 28 bei Drehung des Sonnenrades 29' in Drehrichtung 32 in der dort gezeigten Stellung des zweiten Profils 34 abgewiesen wird. Die bereits teilweise in die Längsnut 3 eingetauchte Klinke 28 wird aber durch die schräg nach radial außen verlaufende Bahn des zweiten Profils 34 wieder ausgehoben und über den Steg 30 gelenkt. Erst nach Verschwenken der Schaltnockenstange 7 um den Winkel 31 wird das zweite Profil 34 zur Einweiseschräge für die Klinke 28 in die Längsnut 3 gegen den Steg 30 gem. Fig. 7.

Im Falle des gezeigten Ausführungsbeispiels weist die Nabenachse 2 acht Längsnuten 3 und entsprechend viele Schaltnockenstangen 7 auf. Es wäre nun möglich, acht Sonnenradebenen zu bedienen, wobei bei einer Umdrehung des jeweiligen Sonnenrades immer ein zweites Profil 34 zum Tragen käme. Da dies aber zu relativ hohen Totgangwinkeln im Antriebsstrang führen würde, wurden in diesem Ausführungsbeispiel einer zu schaltenden Kupplung in der gewünschten Sonnenradebene immer zwei gegenüberliegende Schaltnockenstangen 7 in identischer Ausführung gegenüberliegend angeordnet, wodurch jedes Sonnenrad 29, 29', zweimal pro Umdrehung die Möglichkeit erhält, sich gegen die Nabenachse 2 abzustützen, wenn die Steuerung von außerhalb dies erfordert. Es ist daher ersichtlich, daß mit dieser Anordnung vier Sonnenradebenen bedient werden können.

Die Schalteinrichtung 1 überträgt die Steuerbewegung des Fahrradfahrers in die Schwenkbewegungen der Schaltnockenstangen 7 wie folgt: Mit einem hier nicht gezeigten Schalter wird an einem Seil 27 gezogen und so die Steuerbewegung in die Seilrolle 14 eingeleitet, auf welche das Seil 27 aufgewickelt ist, wobei es mit seinem Ende mit der Seilrolle 14 verbunden ist. Eine Rückholfeder 16 bringt die Seilrolle 14 bei Nachlassen der Steuerbewegung in ihre ursprüngliche Lage zurück. Mit der Seilrolle 14 sind der erste Nockenring 21, der zweite Nockenring 22, der dritte Nockenring 23 und der vierte Nockenring 24 über mindestens eine Schraube 26 verbunden, wodurch ein rohrähnliches Gehäuse mit vier Nockenbahnen 42 gebildet wird. Innerhalb einer jeden Nockenbahn 42 ist ein Nockenhebel 9 angeordnet, welcher mit seiner sichelförmig gekrümmten Form in dem verbleibenden Ringraum zwischen Nabenachse 2 und dem jeweiligen Nockenring, hier 23, eingefügt ist. Der Nockenhebel 9 ist mittels eines Bolzens 48 schwenkbeweglich gelagert und weist am Außenradius der Krümmung etwa im Mittelbereich einen Nocken 41 auf, der mit der Nockenbahn 42 zusammenwirkt und gern. Fig. 2 dem Nockenhebel 9 gestattet, nach außen zu schwenken, sobald die Nockenbahn 42 sich mit ihrem vergrößerten Radius über den Nocken 9 hinwegdreht. Auf diese Weise weicht eine Fläche 49, die am dem Bolzen 48 gegenüberliegenden Ende des Nockenhebels 9 angebracht ist, zurück und gibt den Mitnehmern 10, die mit dieser Fläche 49 in Berührung stehen, die Möglichkeit, der Fläche 49 zu folgen und den Haken 8 von der ersten Schaltstellung 37 in die zweite Schaltstellung 38 mitzunehmen. Der Bolzen 48 lagert den Nockenhebel 9 an der Lagerscheibe 11, welche mittels Führungsnasen 12 in den Längsnuten 3 drehfest mit der Nabenachse 2, verbunden ist. Die Mitnehmer 10 sind mit der Steuerscheibe 18 verbunden, wobei die Steuerscheibe 18 noch einen Mitnahmebolzen 50 aufweist, in welchen eine Feder 19 eingehängt wird, die eine Zugkraft zwischen ihm und einer Federeinhängung 20, welche an der Lagerscheibe 11 angeordnet ist, erzeugt. Auf diese Weise wird eine relative Verdrehung der Lagerscheibe 11 und der Steuerscheibe 18 erzeugt, die dann auftritt, wenn die Fläche 49 des Nockenhebels 9 zurückweicht. Es wird also durch die am Seil 27 eingeleitete Steuerbewegung eine Drehung aller Nockenringe 21 ... 24 bewirkt, die jeder auf seinen Nockenhebel 9 einwirken und über die Flächen 49, die Mitnehmer 10, den jeweiligen Haken 8 der jeweiligen Schaltnockenstange 70 das zweite Profil 34 für die Klinke 28 jeder Sonnenradebene zu präzisen Schaltvorgängen durch Ein- und Ausschalten der Kupplungen führen.

Es hat sich gezeigt, daß es von Vorteil ist, steuerbare Klinkenkupplungen an größeren Durchmessern im Wechselgetriebe der Nabe anzuordnen, so daß die Teilung des Kraftflusses in zwei Richtungen erleichtert wird, wodurch die Gangzahl der Wechselgetriebes vergrößerbar ist. Eine solche Klinkenkupplung 40 ist in Fig. 1 gezeigt, wobei ihre Steuerung nicht mehr durch die vorbeschriebene Anordnung der Schaltelemente durchführbar ist. Für diesen Fall läßt sich die Schalthülse 25 mit ihrer Gleiteinrichtung 44 mit einer Schräge 39 versehen, welche bei axialer Verschiebung der Schalthülse 25 unter die Klinkenkupplung 40 fährt und diese aushebt. Die Schalthülse 25 ist aus diesem Grunde axial verschiebbar und gegen Verdrehen gesichert und wird von der Gleiteinrichtung 44 entsprechend der axialen Kurve 43 hin- und herbewegt, was bei der geeigneten Auslegung der Nockenbahnen 42 und der Kurven 43 zu einer vorteilhaft koordinierbaren Auswahl von vielen Gangstufen führt, die günstig zueinander abstufbar und in der richtigen Reihenfolge schaltbar sind.

## Patentansprüche

1. Wechselgetriebe in einer Mehrgangnabe für ein Fahrrad, umfassend eine Schalteinrichtung (1) auf einer Nabenachse (2) zum Wechseln der Gangstufen in dem als Planetengetriebe ausgeführten Wechselgetriebe über mindestens eine Klinke (28) als in einer Drehrichtung wirkende Kupplung in mindestens einem Sonnenrad (29,29') um ein das Wechselgetriebe umgebendes und mit deren in Antriebsverbindung bringbares Laufrad mit verschiedenen Drehzahlen anzutreiben, wobei die Schalteinrichtung (1) an einem Ende der Nabenachse (2) benachbart zu einem Festkonus (15) angeordnet ist und eine durch eine Rückholfeder (16) in einer Drehrichtung angefederte Seilrolle (14) mit einem auf diese aufwickelbaren Seil (27) aufweist,
**dadurch gekennzeichnet,**
daß die Schalteinrichtung (1) zur Steuerung der Kupplungen in den Sonnenrädern (29,29') mindestens eine Schaltnockenstange (7) umfaßt, die in einer am Außenumfang der Nabenachse (2) achsparallel angeordneten und jeder Schaltnockenstange (7) zugeordneten Längsnut (3) drehbeweglich geführt ist, wobei jede Klinke (28) von jeweils einer von der Schalteinrichtung (1) verdrehbaren Schaltnockenstange (7) ein- und aussteuerbar ist.

2. Wechselgetriebe nach Anspruch 1,
**dadurch gekennzeichnet,**
daß die Klinken (28) in den Sonnenrädern (29) schwenkbeweglich unter Vorspannung einer Klinkenfeder (45) gelagert sind und sich gegen Stege (30) abstützten können, die sich zwischen den Längsnuten (3) erheben.

3. Wechselgetriebe nach Anspruch 1 oder 2,
**dadurch gekennzeichnet,**
daß die Längsnuten (3) ein halbkreisförmiges Profil haben, in welchem sich die Schaltnockenstangen (7) mit ebenfalls halbkreisförmigen Profil um einen Winkel (31) drehen können, wodurch in den beiden Endlagen des Winkels (31) jeweils eine erste Schaltposition (37) und eine zweite Schaltposition (38) erreicht wird.

4. Wechselgetriebe nach einem der Ansprüche 2 oder 3,
**dadurch gekennzeichnet,**
daß die Schaltnockenstange (7) auf ihrer Erstreckung in der Längsnut (3) zwei Profile (33 und 34) aufweist, von denen das erste Profil (33) die Klinke (28) in beiden Schaltpositionen (37 und 38) der Schaltnockenstange (7) dauernd ausgehoben hält, das zweite Profil (34) die Klinke (28) in der ersten Schaltposition (37) der Schaltnockenstange (7) vom Steg (30) abweist, in der zweiten Schaltposition (38) der Schaltnockenstange (7) der Klinke (28) aber den Weg zum Steg (30) freigibt.

5. Wechselgetriebe nach einem der Ansprüche 2 bis 4,
**dadurch gekennzeichnet,**
daß das erste Profil (33) in einer Ebene quer zur Drehachse der Schaltnockenstange (7) eine Dachform beschreibt, dessen First einen Radius (35) um die Drehachse der Schaltnockenstange (7) beschreibt und dessen beide Dachhälften zueinander etwa einen Winkel bilden, der sich aus der Differenz zwischen 180° und dem Drehwinkel (31) der Schaltnockenstange (7) ergibt.

6. Wechselgetriebe nach einem der Ansprüche 2 bis 5,
**dadurch gekennzeichnet,**
daß der Steg (30) eine Schräge (39) aufweist, die die Klinke (28) hilfsweise ablenkt sofern eine Überdeckung zwischen der auf dem Steg auflaufenden Kante der Klinke (28) und dem Steg (30) entsteht.

7. Wechselgetriebe nach einem der Ansprüche 2 bis 5,
**dadurch gekennzeichnet,**
daß die auf dem Steg (30) auflaufende Kante der Klinke (28) eine Schräge oder eine Rundung aufweist, die in die nach radial innen weisende Längsseite der Klinke (28) überleitet und die Klinke (28) am Steg (30) und/oder an dessen Schräge (39) abweist.

8. Wechselgetriebe nach einem der Ansprüche 4 bis 7,
**dadurch gekennzeichnet,**
daß das zweite Profil (34) einer geraden Fläche entspricht, die dem Querschnitt der Schaltnockenstange (7) eine Halbmondform verleiht und die Klinke (28) in der ersten Schaltposition (37) vom Steg (30) abweist, in der zweiten Schaltposition (38) jedoch den Eingriff gegen den Steg (30) auf der Nabenachse (2) erlaubt.

9. Wechselgetriebe nach einem der Ansprüche 2 bis 8,
**dadurch gekennzeichnet,**
daß der Klinke (28) eines jeden Sonnenrades (29,29') mindestens eine Schaltnockenstange (7) zugeordnet ist, wodurch die Klinke (28) auf der Nabenachse (2) bei ihrem Umlauf abwechselnd einen Steg (30) und eine Schaltnockenstange (7) überfährt.

10. Wechselgetriebe nach einem der Ansprüche 4 bis 9,
**dadurch gekennzeichnet,**
daß die Schaltnockenstange (7) das erste Profil (33) dort aufweist, wo ein Eingriff der Klinke (28) in keiner der möglichen Schaltpositionen (7 und 38) der Schaltnockenstange (7) stattfinden soll, und daß die Schaltnockenstange (7) das zweite Profil (34) dort aufweist, wo die Klinke (28) in der ersten Schaltposition (37) abgewiesen wird, wenn sie sich in einer Drehrichtung (32) bewegt, und daß die Klinke (28) in der zweiten Schaltposition (38) zum Eingriff mit dem Steg (30) gelangt, wenn sie sich in der Drehrichtung (32) bewegt.

11. Wechselgetriebe nach einem der Ansprüche 1 bis 10,
**dadurch gekennzeichnet,**
daß die Schaltnockenstange (7) einen Haken (8) aufweist, der rechtwinklig von der Schaltnockenstange (7) abgebogen und von zwei Mitnehmern (10), die auf einer Steuerscheibe (18) angeordnet sind, beidseitig geführt wird.

12. Wechselgetriebe nach einem der Ansprüche 1 bis 11,
**dadurch gekennzeichnet,**
daß am Umfang der Nabenachse (2) eine durch zwei teilbare Anzahl von Längsnuten (3) angeordnet ist, wobei jeweils die sich um 180° gegenüberliegenden Schaltnockenstangen (7) identisch sind.

13. Wechselgetriebe nach einem der Ansprüche 11 oder 12,
**dadurch gekennzeichnet,**
daß der Haken (8) einer jeden Schaltnockenstange (7) die Steuerung jeweils eines Sonnenrades (29,29') übernimmt, und daß somit jeweils ein Haken (8) mit den Mitnehmern (10) auf einer Lagerscheibe (11), einer Steuerscheibe (18), einem Nockenhebel (9) und einem zugehörigen Nockenring (hier 23) jeweils als Schalteinheit der Schaltnockenstange (7) zugeordnet ist.

14. Wechselgetriebe nach Anspruch 13,
**dadurch gekennzeichnet,**
daß jeder Haken (8) axial gesehen zwischen der Steuerscheibe (18) und der Lagerscheibe (11) angeordnet ist, wobei die Steuerscheibe (18) die von außen wirkende Steuerbewegung auf den Haken (8) über seine Mitnehmer (10) überträgt, während die Lagerscheibe (11) über mindestens eine Führungsnase (12) mit der Nabenachse (2) drehfest verbunden ist.

15. Wechselgetriebe nach einem der Ansprüche 13 oder 14,
**dadurch gekennzeichnet,**
daß die Steuerscheibe (18) und die Lagerscheibe (11) gegeneinander in einer Drehrichtung mittels einer Feder (19) vorgespannt sind.

16. Wechselgetriebe nach einem der Ansprüche 13 bis 15,
**dadurch gekennzeichnet,**
daß an der Lagerscheibe (11) mindestens ein Nockenhebel (9) angeordnet ist, der nach radial außen einen Nocken (41) aufweist, der mit einer Nockenbahn (42) zu-sammenwirkt, die in jedem von mehreren Nockenringen (21...24) angeordnet ist.

17. Wechselgetriebe nach Anspruch 16,
**dadurch gekennzeichnet,**
daß die Seilrolle (14) mit dem ersten Nockenring (21), dieser mit dem zweiten Nockenring (22), dieser mit dem dritten Nockenring (23) und dieser wiederum mit dem vierten Nockenring (24) koaxial zu einem rohrförmigen Schaltelement verbunden sind.

18. Wechselgetriebe nach einem der Ansprüche 16 oder 17,
**dadurch gekennzeichnet,**
daß mindestens ein Nockenring (hier 24) an einer Planfläche eine in axialer Richtung profilierte Kurve (43) aufweist, die mit einer Gleiteinrichtung (44) zusammenwirkt, die mit einer Schaltbuchse (25) verbunden ist, wobei auf die gegen Drehung gesicherte Schaltbuchse (25) eine axiale Bewegung übertragbar ist.

19. Wechselgetriebe nach Anspruch 18,
**dadurch gekennzeichnet,**
daß die Schaltbuchse (25) die Nockenringe (21...24) rohrförmig umschließt.

20. Wechselgetriebe nach einem der Ansprüche 18 oder 19,
**dadurch gekennzeichnet,**
daß die Schaltbuchse 25) auf mindestens einem der vier Nockenringe (21...24) drehbar gelagert ist.

21. Wechselgetriebe nach einem der Ansprüche 18 bis 20,
**dadurch gekennzeichnet,**
daß die Schaltbuchse (25) eine Schräge (36) aufweist, die bei axialer Bewegung der Schaltbuchse 25) eine Klinke (40) im Wechselgetriebe der Mehrgangnabe ausheben oder einklinken kann.

## Claims

1. Change-speed gear in a multi-speed hub for a cycle, comprising a changing device (1) on a spindle (2) for changing the ratios in the gearing, which is in the form of planetary gearing, through at least one pawl (28) acting as a one-way clutch, in at least one sunwheel (29,29') in order to drive at different speeds a road wheel which can be mounted around the change-speed gear and in driving connection with it, the changing device (1) being arranged on one end of the spindle (2) adjacent to a stationary cone (15) and having a cable roller (14) spring-urged in one direction of rotation by a restoring spring (16) and a cable (27) wound on the roller,
**characterised in that,**
the changing device (1) for controlling the clutches in the sunwheels (29,29') includes at least one actuating cam bar (7) which is guided to rotate in a longitudinal groove (3) which is arranged on the outside of the spindle (2) parallel to its axis and is associated with the respective cam bar (7), each pawl (28) being operable in and out by a respective cam bar (7) rotated by the changing device (1).

2. Change-speed gear according to claim 1,
**characterised in that,**
the pawls (28) are mounted pivotally in the sunwheels (29) under the pre-load of a pawl spring (45) and can abut against fingers (30) which project between the longitudinal grooves (3).

3. Change-speed gear according to claim 1 or 2,
**characterised in that,**
the longitudinal grooves (3) have a semicircular profile in which the cam bars (7), which likewise have a semicircular profile, can rotate through an angle (31), whereby in the two end positions of the angle (31) there is reached respectively a first change position (37) and a second change position (38).

4. Change-speed gear according to one of claims 2 or 3,
**characterised in that,**
the cam bar (7) has on its extent in the groove (3) two profiles (33 and 34) of which the first profile (33) holds the pawl (28) permanently raised in both change positions (37 and 38),of the cam bar (7), the second profile (34) holds the pawl (28) away from the finger (30) in the first position (37) of the cam bar (7), but in the second position (38) of the cam bar (7) frees the path to the finger (30).

5. Change-speed gear according to one of claims 2 to 4,
**characterised in that,**
the first profile (33) describes a roof shape in a plane transverse to the axis of rotation of the cam bar (7), the ridge of the roof describing a radius (35) about the axis of rotation of the cam bar (7) and the two halves of the roof making between them an angle which results from the difference between 180° and the angle of rotation (31) of the cam bar (7).

6. Change-speed gear according to one of claims 2 to 5,
**characterised in that,**
the finger (30) has a chamfer (39) which assists in deflecting the pawl (28) insofar as an overlap arises between the edge of the pawl (28) resting on the finger and the finger (30) itself.

7. Change-speed gear according to one of claims 2 to 5,
**characterised in that,**
the edge of the pawl (28) which engages the finger (30) has a chamfer or rounded-off portion which merges into the radially inwardly extending longitudinal side face of the pawl (28) and deflects the pawl (28) on the finger (30) and/or on its chamfer (39).

8. Change-speed gear according to one of claims 4 to 7,
**characterised in that,**
the second profile (34) corresponds to a straight surface which gives the cross-section of the cam bar (7) a half-moon shape and deflects the pawl (28) from the finger (30) in the first position (37), but in the second position (38) permits the engagement against the finger (30) on the spindle (2).

9. Change-speed gear according to one of claims 2 to 8,
**characterised in that,**
the pawl (28) has associated with it for at least one cam bar (7) each sunwheel (29,29'), whereby the pawl (28) traverses on the spindle (2) on its rotation alternately a finger (30) and a cam bar (7).

10. Change-speed gear according to one of claims 4 to 9,
**characterised in that,**
the cam bar (7) has the first profile (33) at the point where an engagement of the pawl (28) is not intended to take place in either of the possible positions (37 and 38) of the cam bar (7), and that the cam bar (7) has the second profile (34) at the point where the pawl (28) is deflected in the first position (37) when it moves in one direction of rotation (32), and that in the second position (38) the pawl (28) comes into engagement with the finger (30) when it moves in the one direction of rotation (32).

11. Change-speed gear according to one of claims 1 to 10,
**characterised in that,**
the cam bar (7) has a hook (8) which is bent away at right angles away from the changing cam bar (7) and is guided on both sides by two followers (10) which are arranged on a control disc (18).

12. Change-speed gear according to one of claims 1 to 11,
**characterised in that,**
on the periphery of the spindle (2) there is arranged an even number of longitudinal grooves (3), the cam bars (7) which lie opposite one another at 180° being identical.

13. Change-speed gear according to one of claims 11 or 12,
**characterised in that,**
the hook (8) on each cam bar (7) handles the control of a respective sunwheel (29,29'), and that accordingly a respective hook (8) is associated with the followers (10) on a bearing disc (11), a control disc (18), a cam lever (9) and an associated cam ring (here 23) respectively as a changing unit of the cam bar (7).

14. Change-speed gear according to claim 13,
**characterised in that,**
each hook (8) is arranged, looking axially, between the control disc (18) and the bearing disc (11), the control disc (18) transmitting control movement acting from outside to the hook (8) through its follower (10), whilst the bearing disc (11) is connected to the spindle (2) to rotate with it through at least one guide nose (12).

15. Change-speed gear according to one of claims 13 or 14,
**characterised in that,**
the control disc (18) and the bearing disc (11) are urged relative to one another in one direction of rotation by means of a spring (19).

16. Change-speed gear according to one of claims 13 to 15,
**characterised in that,**
there is arranged on the bearing disc (11) at least one cam lever (9) which has a radially outwardly extending cam (41) which cooperates with a cam track (42) arranged in each of several cam rings (21...24).

17. Change-speed gear according to claim 16,
**characterised in that,**
the cable roller (14) is connected to the first cam ring (21), the latter to the second cam ring (22), the latter to the third cam ring (23) and this in its turn to the fourth cam ring (24) coaxially with a tubular changing element.

18. Change-speed gear according to one of claims 16 or 17,
**characterised in that,**
at least one cam ring (here 24) has on one flat face a curve (43) which is profiled in an axial direction and which co-operates with a slide device (44) connected to a gear-changing bush (25), whereby an axial movement is transmitted to the bush (25), which is secured against rotation.

19. Change-speed gear according to claim 18,
**characterised in that,**
the bush (25) encloses the cam rings (21...24) in a tubular manner.

20. Change-speed gear according to one of claims 18 or 19,
**characterised in that,**
the bush (25) is rotatably mounted on at least one of the four cam rings (21...24).

21. Change-speed gear according to one of claims 18 to 20,
**characterised in that,**
the bush (25) has a chamfer (36) which, on axial movement of the bush (25), can lift off from or engage in a pawl (40) in the change-speed gear of the multi-speed hub.

## Revendications

1. Engrenage à changement de vitesse dans un moyeu multi-vitesses équipant une bicyclette, comprenant un dispositif commutateur (1) monté sur un axe (2) de moyeu et servant à changer les vitesses, dans l'engrenage susmentionné exécuté en engrenage à planétaires, par le biais d'au moins un cliquet (28) offiçant d'accouplement agissant dans un sens de rotation dans au moins une roue solaire (29, 29'), pour entraîner à différentes vitesses une roue enveloppant l'engrenage à changement de vitesse et embrayable en jonction motrice avec ce dernier, le dispositif de changement (1) étant disposé à une extrémité de l'axe (2) du moyeu au voisinage d'un cône fixe (15), et ce dispositif présentant un galet (14) à mouvement amorti dans un sens de rotation par un ressort de rappel (16), lequel (14) présente un câble (27) enroulable sur lui (14),
caractérisé en ce que
le dispositif de changement (1) servant à piloter les accouplements dans les roues solaires (29, 29') comprend au moins une tige (7) à came commutatrice guidée en mouvement circulaire dans une rainure longitudinale (3) disposée en parallélisme axial sur la circonférence extérieure de l'axe (2) du moyeu et affectée à chaque tige (7) à came commutatrice, chaque cliquet (28) étant embrayable et débrayable par une tige (7) que peut faire tourner le dispositif de changement (1).

2. Engrenage à changement de vitesse selon la revendication 1,
caractérisé en ce que
les cliquets (28) reposent, sous précontrainte engendrée par un ressort (45) tout en conservant une liberté de pivotement, dans les roues solaires (29) et qu'ils peuvent s'appuyer contre les nervures (30) qui font saillie entre les rainures longitudinales (3).

3. Engrenage à changement de vitesse selon la revendication 1 ou 2,
caractérisé en ce que
les rainures longitudinales (3) présentent un profil semi-circulaire dans lequel les tiges (7) à came commutatrice présentant elles aussi un profil semi-circulaire peuvent tourner d'un certain angle (31), les deux positions finales de l'angle (31) représentant respectivement un première position de commutation (37) et une seconde position de commutation (38) de la tige (7).

4. Engrenage à changement de vitesse selon l'une des revendications 2 ou 3,
caractérisé en ce que
la tige (7) à came commutatrice présente sur sa partie s'étendant dans la rainure longitudinale (3) deux profils (33 et 34), le premier profil (33) maintenant le cliquet (28) en permanence soulevé et extrait lorsque la tige (7) se trouve dans les deux positions de commutation (37 et 38), le second profil (34) déviant le cliquet (28) par rapport à la nervure (30) lorsque la tige (7) à came commutatrice se trouve dans la première position de commutation (37), mais ce même profil (34) guidant le cliquet (28) vers la nervure (30) lorsque la tige (7) à came commutatrice se trouve dans la seconde position de commutation (38).

5. Engrenage à changement de vitesse selon l'une des revendications 2 à 4
caractérisé en ce que
le premier profil (33), considéré dans un plan transversal à l'axe de rotation de la tige (7) à came commutatrice, a la forme d'un toit dont le faîte décrit un rayon (35) autour de l'axe de rotation de la tige (7) à came commutatrice, et dont les deux moitiés de toit forment réciproquement un angle résultant de la différence entre 180° et l'angle de rotation (31) de la tige (7) à came commutatrice.

6. Engrenage à changement de vitesse selon l'une des revendications 2 à 5
caractérisé en ce que
la nervure (30) présente une inclinaison (39) qui dévie accessoirement le cliquet (28) lorsqu'un chevauchement se produit entre l'arête du cliquet (28) arrivant sur la nervure (30) et cette dernière.

7. Engrenage à changement de vitesse selon l'une des revendications 2 à 5,
caractérisé en ce que
l'arête du cliquet (28) arrivant sur la nervure (30) présente une inclinaison ou un arrondi qui transfère dans le côté longitudinal (regardant radialement à l'intérieur) du cliquet (28) et dévie le cliquet (28) contre la nervure (30) et/ou contre son inclinaison (39).

8. Engrenage à changement de vitesse selon l'une des revendications 4 à 7,
caractérisé en ce que
le second profil (34) correspond à une surface droite conférant à la section de la tige (7) à came commutatrice la forme d'une demi-lune et en ce qu'il dévie le cliquet (28) de la nervure (30) lorsque la tige (7) se trouve dans la première position de commutation (37), mais permet un engrènement contre la nervure (30) sur l'axe (2) du moyeu lorsque la tige (7) se trouve dans la seconde position de commutation (38).

9. Engrenage à changement de vitesse selon l'une des revendications 2 à 8,
caractérisé en ce que
au cliquet (28) de chaque roue solaire (29, 29') est affectée au moins une tige (7) à barre de commutation faisant que le cliquet (28) en rotation sur l'axe (2) du moyeu passe alternativement au-dessus d'une nervure (30) et d'une tige (7) à came commutatrice.

10. Engrenage à changement de vitesse selon l'une des revendications 4 à 9,
caractérisé en ce que
la tige (7) à came commutatrice présente son premier profil (33) là où l'engrènement du cliquet (28) ne doit se produire dans aucune des positions de commutation possibles (7 et 38) de la tige (7), et en ce que la tige (7) présente son second profil (34) là où la tige (7) à came commutatrice est déviée dans la première position de commutation (37) lorsqu'elle se déplace dans un sens de rotation (32), et en ce que le cliquet (28) (tige (7) dans la seconde position de commutation (38)) engrène avec la nervure (30) lorsqu'il (28) se déplace dans le sens de rotation (32).

11. Engrenage à changement de vitesse selon l'une des revendications 1 à 10,
caractérisé en ce que
la tige (7) à came commutatrice présente un crochet (8) partant en coude orthogonal depuis la tige (7) à came commutatrice et qu'il est guidé bilatéralement par deux taquets entraîneurs (10) disposés sur une came-pilote (18).

12. Engrenage à changement de vitesse selon l'une des revendications 1 à 11,
caractérisé en ce que
sur la circonférence de l'axe (2) du moyeu sont disposées un certain nombre, divisible par deux, de rainures longitudinales (3), les tiges (7) à came commutatrice réciproquement opposées à 180° étant identiques.

13. Engrenage à changement de vitesse selon l'une des revendication 11 ou 12,
caractérisé en ce que
le crochet (8) de chaque tige (7) à came commutatrice se charge de piloter respectivement une roue solaire (29, 29'), et qu'ainsi chaque fois un crochet (8) avec les les taquets entraîneurs (10) sur une came d'appui (11) est affecté à une came-pilote (18), à un lever de came (9) et à l'anneau de came afférant (23 dans ce cas-ci) pour former chaque fois une unité commutatrice de la tige (7) à came commutatrice.

14. Engrenage à changement de vitesse selon la revendication 13,
caractérisé en ce que
chaque crochet (8) envisagé axialement est disposé entre la came-pilote (18) et la came d'appui (11), la came-pilote (18) transmettant au crochet (8) par le biais de ses taquets entraîneurs (10) le mouvement-pilote exercé de l'extérieur, tandis que la came d'appui (11) est reliée sans tourner à l'axe (2) du moyeu par le biais d'au moins un nez de guidage (12).

15. Engrenage à changement de vitesse selon l'une des revendications 13 ou 14,
caractérisé en ce que
dans un sens de rotation, la came-pilote (18) et la came d'appui (11) sont précontraintes l'une contre l'autre par un ressort (19).

16. Engrenage à changement de vitesse selon l'une des revendications 13 à 15,
caractérisé en ce que
contre la came d'appui (11) est disposé au moins un levier (9) de came, lequel présente dans le sens radial extérieur une came (41) interagissant avec une piste à cames (42) disposée dans chacun des multiples anneaux-came (21...24).

17. Engrenage à changement de vitesse selon la revendication 16,
caractérisé en ce que
le galet à câble (14) est relié au premier anneau-came (21), ce dernier avec le deuxième anneau-came (22), ce dernier avec le troisième anneau-came (23) et ce dernier à son tour avec le quatrième anneau-came (24), de manière coaxiale, pour donner un élément commutateur de géométrie tubulaire.

18. Engrenage à changement de vitesse selon la revendication 16 ou 17,
caractérisé en ce que
au moins un anneau-came (24 dans ce cas-ci) présente sur une surface plane une courbe (43) profilée dans le sens axial et interagissant avec un dispositif de glissement (44) relié à une douille commutatrice (25), un mouvement axial étant transmissible à cette douille (25) verrouillée pour l'empêcher de tourner.

19. Engrenage à changement de vitesse selon la revendication 18,
caractérisé en ce que
la douille commutatrice (25) enveloppe telle un tube les anneaux-cames (21...24).

20. Engrenage à changement de vitesse selon l'une des revendications 18 ou 19,
caractérisé en ce que
la douille commutatrice (25) se trouve en appui rotatif sur au moins l'un des quatre anneaux-cames (21...24).

21. Engrenage à changement de vitesse selon l'une des revendications 18 à 20,
caractérisé en ce que
la douille commutatrice (25) présente une inclinaison (36) qui, lorsqu'elle (25) décrit un mouvement axial, peut débrayer un cliquet (40) hors de l'engrenage du moyeu multivitesses ou l'embrayer dedans.
